# EUROPÄISCHE PATENTANMELDUNG

(11) **EP 4 166 711 A1**
(43) Veröffentlichungstag der Anmeldung: **19.04.2023**
(21) Anmeldenummer: 22200766.8
(22) Anmeldetag: 11.10.2022
(51) Int. Cl.: D06M 13/513, D06M 15/643, D06M 15/647

(54) **WEICHGRIFFZUSAMMENSETZUNG**

(30) Priorität: 12.10.2021 EP 21202211
(71) Anmelder: Rudolf GmbH, 82538 Geretsried (DE)
(72) Erfinder: HAYESSEN, Rainer, Geretsried (DE); HUBER, Ludwig, Geretsried (DE); SIELEMANN, Dirk, Wolfratshausen (DE); DUSCHEK, Gunther, Benediktbeuern (DE)
(74) Vertreter: Weickmann, Hans

(57) **Zusammenfassung**

Die vorliegende Erfindung betrifft eine Zusammensetzung die insbesondere als Weichgriffzusammensetzung bei der Ausrüstung von Textilien eingesetzt werden kann, umfassend mindestens ein quaternäres Ammoniumsilan, eine Organopolysiloxan-Verbindung mit einer Dielektrizitätskonstante von 2,90-10,0, ggf. einen Emulgator, Wasser und ggf. ein organisches Lösungsmittel. Die Erfindung betrifft ferner ein Verfahren zur Herstellung der erfindungsgemäßen Zusammensetzung, eine Verwendung der erfindungsgemäßen Zusammensetzung zur Ausrüstung eines Textils, ein Verfahren zur Ausrüstung eines Textils, und ein Produkt, erhältlich durch das erfindungsgemäße Verfahren.

## Beschreibung

### Gegenstand der Erfindung

Die vorliegende Erfindung betrifft eine Zusammensetzung die insbesondere als Weichgriffzusammensetzung bei der Ausrüstung von Textilien eingesetzt werden kann, umfassend mindestens ein quaternäres Ammoniumsilan, eine Organopolysiloxan-Verbindung mit einer Dielektrizitätskonstante von 2,90-10,0, ggf. einen Emulgator, Wasser und ggf. ein organisches Lösungsmittel. Die Erfindung betrifft ferner ein Verfahren zur Herstellung der erfindungsgemäßen Zusammensetzung. Zudem betrifft die vorliegende Erfindung eine Verwendung der erfindungsgemäßen Zusammensetzung zur Ausrüstung eines Textils, ein Verfahren zur Ausrüstung eines Textils und ein durch dieses Verfahren erhältliche Produkt.

### Stand der Technik

Organopolysiloxane können als Textilausrüstungsmittel verwendet werden, um bei den damit behandelten Textilien einen weichen Griff zu erzeugen. Bevorzugt werden Organopolysiloxane verwendet, die in Form von wässrigen Mikroemulsionen Anwendung finden können. Ein Weichgriffeffekt wird z.B. mit Aminogruppen-enthaltenden Organopolysiloxanen erzielt, wobei die Aminogruppen in Form von Aminoethylaminopropylgruppen in der Seitenkette vorliegen. Dabei wird eine besondere Affinität des Weichgriffmittels zur Faseroberfläche des textilen Substrates erzielt, die einen guten Weichgriff verursacht.

WO 2015/040171 A1 beschreibt Polysiloxane mit quaternierten heterocyclischen Gruppen in der Seitenkette zur Ausrüstung von Textilien. Die Verbindungen zeichnen sich durch einen hervorragenden Weichgriff aus.

EP 1 560 972 A1 offenbart Zubereitungen, die teilquaternierte, aminofunktionelle Organopolysiloxane umfassen, und deren Verwendung in wässrigen Systemen auf textilen Substraten. Die quaternären Ammoniumgruppen sind hierbei auf dem Polysiloxanrücken terminal in α,ω-Stellung und die aminofunktionellen Gruppen lateral positioniert.

EP 1 576 056 A1 beschreibt hochkonzentrierte, selbstemulgierende Zubereitungen, enthaltend Organopolysiloxane und Alkylammoniumverbindungen und deren Verwendung in wässrigen Systemen auf textilen Substraten.

Es hat sich gezeigt, dass sich in Textilien, die bevorzugt einen weichen Griff aufweisen sollen und in engem Körperkontakt stehen, wie Handtücher oder Bademäntel, aber auch in Sportbekleidung und Medizintextilien, Bakterien und andere Mikroorganismen in Anwesenheit von Feuchtigkeit und Schweiß sehr schnell vermehren.

Die Besiedlung durch Mikroorganismen und somit auch die häufig damit verbundene Zersetzung von Produkten und Materialien kann durch antimikrobielle Mittel verhindert werden. Diese Mittel wirken, indem sie das Wachstum von Bakterien, Pilzen, Viren, und/oder Algen inhibieren oder diese abtöten.

Quaternäre Ammoniumorganosilane werden aufgrund ihrer bioziden Wirkung als Konservierungsmittel in flüssigen Zusammensetzungen wie z.B. Kosmetika, Textilhilfsmitteln und Produkten für die Öl-, Gas-, Papier-, Leder- und Lebensmittelindustrie eingesetzt. Sie können auch zum Schutz von festen Oberflächen wie z.B. Holz, Textilien, Leder, Stein, Beton, Kunststoffen etc. direkt verwendet werden. Häufig werden sie auch als Bestandteil von Beschichtungsmittelzusammensetzungen eingesetzt, um die damit erzeugten Schichten vor einem Befall mit Mikroorganismen zu schützen.

US 4,631,273 A beschreibt wässrige Emulsionen von quaternären Ammoniumorganosilanen zur antimikrobiellen Beschichtung.

EP 0 552 874 A1 offenbart Zusammensetzungen, die ein Alkyltrialkoxysilan als bioziden Wirkstoff in Kombination mit einem wasserlöslichen Silan-Kopplungsmittel und einer wässrigen Emulsion eines Hydroxy-endblockierten Polydiorganosiloxans umfassen. Die Zusammensetzung polymerisiert und hinterlässt beim Trocknen einen hydrophoben elastischen Film.

EP 0 354 569 A1 beschreibt wasserlösliche Zusammensetzungen umfassend quaternäre Ammoniumorganosilane zur antimikrobiellen Behandlung von Textilien oder Haut.

Die Bedeutung von antimikrobiell ausgerüsteten Textilien hat in den letzten Jahren stark zugenommen. Nicht nur im Consumerbereich sondern auch im professionellen Arbeitsschutzbereich beispielsweise im Gesundheitswesen werden heutzutage hohe Anforderungen an die Hygiene gestellt. Über textile Materialien können Mikroorganismen verteilt werden, so dass z.B. Bekleidung im Krankenhaus und in der Pflege im Gebrauch eine potentielle Gefahr darstellen kann. Durch die Ausrüstung mit antimikrobiellen Mitteln kann die Kontamination der Textilien mit unerwünschten Mikroorganismen effektiv unterbunden und somit ein Übertragungsweg verringert bzw. eliminiert werden.

EP 0 279 623 beschreibt Silan-Mikroemulsionen, die zur antimikrobiellen Beschichtung einer Reihe von Oberflächen, insbesondere textilen Oberflächen geeignet ist.

EP 2 102 408 A1 offenbart Verfahren zur antimikrobiellen, waschpermanenten Ausrüstung von Textilien und Fasern. Quaternäre Ammoniumsilane werden hierzu mit einer organischen Primer-Komponente, die die Hydrophobie der Textilien und Fasern erhöht, auf die Substrate aufgetragen.

EP 2 099 302 A1 schlägt Zusammensetzungen aus einer quaternären Ammoniumorganosilan-Verbindung und einer Metallsalz-Komponente zur antimikrobiellen Ausrüstung von Textilien vor.

Die im Stand der Technik eingesetzten quaternäre Ammoniumsilan-Verbindungen verschlechtern jedoch den Weichgriff von Textilien. Es besteht daher ein großes Bedürfnis, eine Kombination aus Weichgriffmitteln und antimikrobiellen Wirkstoffen bereitzustellen.

EP 0 415 540 A1 beschreibt antimikrobielle Wirkstoffe in Kombination mit einem Weichgriffmittel zur Verwendung als Hygienespüler. Das Weichgriffmittel ist bevorzugt aus quaternären Monoammonium-Verbindungen mit C12-C20 oder C₁₈-C₂₄-Alkylketten, quaternären Imidazol- und Polyammonium-Verbindungen, Polyamin- und Polyalkylenimin-Salzen ausgewählt.

WO 2018/085564 beschreibt Zusammensetzungen zur Textilbehandlung umfassend einen antimikrobiellen Wirkstoff und ein Weichgriffmittel, bevorzugt ein Fettsäureamid.

Diese Kombinationen aus Weichgriffmittel und antimikrobiellem Wirkstoff weisen jedoch mehrere Probleme auf. Zum einen verschlechtern antimikrobielle quaternäre Ammoniumsilane den Griff des Textils. Zum anderen hat sich gezeigt, dass Organopolysiloxan-Verbindungen den antimikrobiellen Effekt von quaternären Ammoniumorganosilan-Verbindungen reduzieren.

Aufgabe der vorliegenden Erfindung ist es daher, eine Zusammensetzung bereitzustellen, die sowohl einen verbesserten Weichgriff als auch eine waschpermanente antimikrobielle und/oder antivirale Wirksamkeit zur Verfügung stellt.

Überraschenderweise wurde gefunden, dass Zusammensetzungen, die mindestens ein quaternäres Ammoniumsilan und eine Organopolysiloxan-Verbindung mit einer Dielektrizitätskonstante von 2,90-10,0 umfassen, diese Aufgabe lösen. Die erfindungsgemäßen Zusammensetzungen führen auf Textilien zu einem verbesserten Weichgriff und gleichzeitig zu einer waschpermanenten antimikrobiellen/antiviralen Wirksamkeit. Zusätzlich zeichnen sich die ausgerüsteten Textilen durch eine verbesserte Saugfähigkeit aus.

### Detaillierte Beschreibung der Erfindung

Die vorliegende Erfindung betrifft eine Zusammensetzung, umfassend
(I) mindestens ein quaternäres Ammoniumsilan, dargestellt durch die folgende Formel (1)

   X₄₋ₙSi(-R-NR¹R²R³)ₙ⁺ Y⁻ Formel (1)

   wobei
   X unabhängig ein Alkoxyrest mit 1 bis 6 Kohlenstoffatomen, ein Alkoxyalkoxyrest mit 2 bis 8 Kohlenstoffatomen oder ein Alkylrest mit 1 bis 6 Kohlenstoffatomen ist,
   Y⁻ ein Säureanion ist,
   n eine ganze Zahl ausgewählt aus 1, 2 oder 3 ist,
   R ein zweiwertiger Kohlenwasserstoffrest mit 1 bis 6 Kohlenstoffatomen ist,
   R¹ ein gesättigter oder ungesättigter, linearer oder verzweigter Kohlenwasserstoffrest mit 8 bis 22 Kohlenstoffatomen ist,
   R² ein gesättigter oder ungesättigter, linearer oder verzweigter Kohlenwasserstoffrest mit 1 bis 22 Kohlenstoffatomen ist,
   R³ ein gesättigter oder ungesättigter, linearer oder verzweigter Kohlenwasserstoffrest mit 1 bis 22 Kohlenstoffatomen ist;
(II) eine Organopolysiloxan-Verbindung mit mindestens einer funktionellen Gruppe ausgewählt aus einer quaternären Ammoniumgruppe, einer Aminogruppe, einer Amidogruppe und einer Polyalkylenoxidgruppe,
   wobei die Dielektrizitätskonstante der Komponente (II) 2,90-10,0 beträgt, gemessen bei 25°C und 10 kHz;
(III) ggf. einen Emulgator;
(IV) Wasser; und
(V) ggf. ein organisches Lösungsmittel.

Die erfindungsgemäße Zusammensetzung umfasst (I) mindestens eine Verbindung der Formel (1)

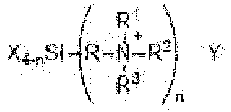

X ist unabhängig ein Alkoxyrest mit 1 bis 6 Kohlenstoffatomen, ein Alkoxyalkoxyrest mit 2 bis 8 Kohlenstoffatomen oder ein Alkylrest mit 1 bis 6 Kohlenstoffatomen. In einer bevorzugten Ausführungsform ist X ein Alkoxyrest mit 1 bis 6 Kohlenstoffatomen, bevorzugt ausgewählt aus Methoxy oder Ethoxy, insbesondere Methoxy.

n ist eine ganze Zahl ausgewählt aus 1, 2 oder 3. In einer bevorzugten Ausführungsform ist n eine ganze Zahl ausgewählt aus 1 oder 2 und ist bevorzugt 1.

R ist ein zweiwertiger Kohlenwasserstoffrest mit 1 bis 6 Kohlenstoffatomen. In einer bevorzugten Ausführungsform ist R eine zweiwertige Alkylgruppe mit 1 bis 6 Kohlenstoffatomen, bevorzugt ausgewählt aus Ethyl oder Propyl, besonders bevorzugt Propyl.

R¹ ist ein gesättigter oder ungesättigter, linearer oder verzweigter Kohlenwasserstoffrest mit 8 bis 22 Kohlenstoffatomen. In einer bevorzugten Ausführungsform ist R¹ ein linearer oder verzweigter Alkylrest mit 8 bis 22 Kohlenstoffatomen, bevorzugt ausgewählt aus Dodecyl, Tetradecyl, Hexadecyl oder Octadecyl, besonders bevorzugt Tetradecyl, Hexadecyl oder Octadecyl.

R² ist ein gesättigter oder ungesättigter, linearer oder verzweigter Kohlenwasserstoffrest mit 1 bis 22 Kohlenstoffatomen. In einer bevorzugten Ausführungsform ist R² ein linearer oder verzweigter Alkylrest mit 1 bis 22 Kohlenstoffatomen, insbesondere 1-10 Kohlenstoffatomen. Insbesondere ist R² Methyl oder Ethyl, bevorzugt Methyl.

R³ ist ein gesättigter oder ungesättigter, linearer oder verzweigter Kohlenwasserstoffrest mit 1 bis 22 Kohlenstoffatomen. In einer bevorzugten Ausführungsform ist R³ ein linearer oder verzweigter Alkylrest mit 1 bis 22 Kohlenstoffatomen, insbesondere 1-10 Kohlenstoffatomen. Insbesondere ist R³ Methyl oder Ethyl, besonders bevorzugt Methyl.

In einer bevorzugten Ausführungsform ist sowohl R² als auch R³ ein Alkylrest mit 1 bis 22 Kohlenstoffatomen, insbesondere 1-10 Kohlenstoffatomen. Bevorzugt sind R² und R³ jeweils ausgewählt aus Methyl und Ethyl.

R² und R³ können unterschiedliche Kohlenwasserstoffrest mit 1 bis 22 Kohlenstoffatomen sein. In einer bevorzugten Ausführungsform sind R² und R³ Ethyl. In einer besonders bevorzugten Ausführungsform sind R² und R³ Methyl.

Y⁻ ist ein Säureanion. Ein Säureanion entsprechend der vorliegenden Erfindung ist ein negativ geladenes Molekül oder Atom, das durch Dissoziation eines Säuremoleküls erhältlich ist. Das Säureanion Y⁻ weist insbesondere einfache negative Ladung auf. Bevorzugt ist Y⁻ ausgewählt ist aus Chlorid, Bromid, lodid, Methosulfat oder Tosylat.

In einer bevorzugten Ausführungsform ist:
X ein Alkoxyrest mit 1 bis 6 Kohlenstoffatomen,
n eine ganze Zahl ausgewählt aus 1 oder 2,
R eine zweiwertige Alkylgruppe mit 1 bis 6 Kohlenstoffatomen,
R¹ ein linearer oder verzweigter Alkylrest mit 8 bis 22 Kohlenstoffatomen,
R² ein linearer oder verzweigter Alkylrest mit 1 bis 22 Kohlenstoffatomen,
R³ ein linearer oder verzweigter Alkylrest mit 1 bis 22 Kohlenstoffatomen und
Y⁻ Chlorid, Bromid, lodid, Methosulfat oder Tosylat.

In einer besonders bevorzugten Ausführungsform ist:
X ausgewählt aus Methoxy oder Ethoxy, insbesondere Methoxy,
n eine ganze Zahl ausgewählt aus 1 oder 2 und bevorzugt 1,
R Ethyl oder Propyl, besonders bevorzugt Propyl,
R¹ ausgewählt aus Dodecyl, Tetradecyl, Hexadecyl oder Octadecyl, bevorzugt Tetradecyl, Hexadecyl oder Octadecyl.
R² Methyl oder Ethyl, bevorzugt Methyl,
R³ Methyl oder Ethyl, bevorzugt Methyl, und
Y⁻ ausgewählt aus Chlorid oder Bromid.

Insbesondere kann das mindestens eine quaternäre Ammoniumsilan der Formel (1) ausgewählt sein aus:

(CH₃O)₃Si(CH₂)₃N⁺(CH₃)₂C₁₈H₃₇Cl⁻

(CH₃O)₃Si(CH₂)₃N⁺(CH₃)₂C₁₈H₃₇Br⁻

(CH₃O)₃Si(CH₂)₃N⁺(C₁₀H₂₁)₂CH₃Cl⁻

(CH₃O)₃Si(CH₂)₃N⁺(C₁₀H₂₁)₂CH₃Br⁻

(CH₃)₃Si(CH₂)₃N⁺(CH₃)₂C₁₂H₂₅Cl⁻

(CH₃)₃Si(CH₂)₃N⁺(C₁₀H₂₁)₂CH₃Cl⁻

(CH₃)₃Si(CH₂)₃N⁺(CH₃)₂C₁₈H₃₇Cl⁻

und

(C₂H₅O)₃Si(CH₂)₃N⁺(CH₃)₂C₁₈H₃₇Cl⁻.

In einer besonders bevorzugten Ausführungsform ist Komponente (I) 3-(Trimethyloxysilyl)propyldimethyloctadecylammoniumchlorid.

Die Komponente (I) besitzt eine antimikrobielle und/oder antivirale Wirkung. Eine antimikrobielle Wirkung bedeutet, dass die Komponente (I) das Wachstum von Mikroorganismen, wie Bakterien, Pilzen, Algen und/oder Hefen, reduziert oder hemmt oder diese abtötet bzw. inaktiviert. Eine antivirale Wirkung bedeutet, dass die Komponente (I) die Inaktivierung von Viren bewirkt. Insbesondere ist Komponente (I) in einer solchen Menge in der erfindungsgemäßen Zusammensetzung enthalten, dass die Zusammensetzung antimikrobiell und/oder antiviral wirkt. Eine antibakterielle Wirkung kann gemäß ISO 20743 bestimmt werden. Eine antivirale Wirkung kann gemäß ISO 18184 bestimmt werden.

Der Gehalt an Komponente (I) kann 1-25 Gew.%, bevorzugt 1-15 Gew.%, besonders bevorzugt 1-10 Gew.% bezogen auf das Gesamtgewicht der Zusammensetzung betragen. In einer bevorzugten Ausführungsform umfasst die erfindungsgemäße Zusammensetzung 1-25 Gew.%, bevorzugt 1-15 Gew.%, besonders bevorzugt 1-10 Gew.% 3-(Trimethyloxysilyl)propyldimethyloctadecylammoniumchlorid bezogen auf das Gesamtgewicht der Zusammensetzung.

Bei dem mindestens einen Ammoniumsilan handelt es sich insbesondere um ein reaktives Alkoxysilan, wie ein reaktives Methoxysilan. Ein reaktives Alkoxysilan ist eine Silanverbindung, deren Alkoxygruppen in Kontakt mit Wasser teilweise hydrolysieren und/oder kondensieren können. Die Komponente (I) kann somit in der erfindungsgemäßen Zusammensetzung teilweise hydrolysiert und/oder kondensiert vorliegen. Verbleibende, nicht hydrolysierte bzw. kondensierte Alkoxygruppen können bei Applikation der erfindungsgemäßen Zusammensetzung auf ein Substrat, wie beispielsweise ein Textil, mit dem Substrat und/oder anderen Ammoniumsilanmolekülen mit nicht hydrolysierten bzw. kondensierten Alkoxygruppen reagieren und so auf der Substratoberfläche ein Polymernetzwerk ausbilden. Die quaternäre Ammoniumgruppe des Silans ist nicht an dieser Hydrolyse- bzw. Kondensationsreaktion beteiligt und ist für die antimikrobielle und/oder antiviralen Wirkung der Komponente (I) gegenüber z.B. Bakterien, Pilz, Algen, und Viren verantwortlich.

Hergestellt werden können Ammoniumsilan-Verbindungen entsprechend Komponente (I) beispielsweise mittels Umsetzung eines Chloralkylsilans mit tertiären Aminen. Besonders geeignet ist die Reaktion von Chloropropyltrimethoxysilan mit Dimethyltetradecylamin, Dimethylhexadecylamin oder Dimethyloctadecylamin.

Die erfindungsgemäße Zusammensetzung umfasst ferner (II) eine Organopolysiloxan-Verbindung mit mindestens einer funktionellen Gruppe ausgewählt aus einer quaternären Ammoniumgruppe, einer Aminogruppe, einer Amidogruppe und einer Polyalkylenoxidgruppe.

Die Dielektrizitätskonstante der Komponente (II) beträgt 2,90-10,0, gemessen bei 25°C und 10 kHz an der Reinsubstanz, d.h. ohne Lösungsmittel oder dergleichen, in Anlehnung an DIN EN 60247 (vgl. Nihon Rufuto Co., Ltd., Liquid Dielectric Constant Meter Model 871, Operation Manual Version 1.0 2008). In einer bevorzugten Ausführungsform ist die Dielektrizitätskonstante der Komponente (II) 2,90-6,50, stärker bevorzugt 2,90-5,00, insbesondere 3,00-5,80, gemessen bei 25°C und 10 kHz an der Reinsubstanz.

Der Gehalt an Komponente (II) in der erfindungsgemäßen Zusammensetzung kann 1-50 Gew.%, bevorzugt 5-30 Gew.%, besonders bevorzugt 10-20 Gew.% bezogen auf das Gesamtgewicht der Zusammensetzung betragen.

Ein Gewichtsverhältnis der Komponente (I) zur Komponente (II) in der erfindungsgemäßen Zusammensetzung kann 1 : 50 bis 25 : 1, bevorzugt 1 : 30 bis 3 : 1, stärker bevorzugt 1 : 20 bis 1 : 1 betragen.

Komponente (II) ist insbesondere ein Polyalkylsiloxan und bevorzugt ein Polydimethylsiloxan mit mindestens einer funktionellen Gruppe ausgewählt aus einer quaternären Ammoniumgruppe, einer Aminogruppe, einer Amidogruppe und einer Polyalkylenoxidgruppe ist.

Komponente (II) weist bevorzugt mindestens eine quaternäre Ammoniumgruppe und/oder mindestens eine Aminogruppe auf. Bevorzugt weist Komponente (II)
- mindestens eine quaternäre Ammoniumgruppe,
- mindestens eine quaternäre Ammonium- und Polyalkylenoxidgruppe,
- mindestens eine Amino- und Polyalkylenoxidgruppe,
- mindestens eine quaternäre Ammonium-, Amino- und Polyalkylenoxidgruppe,
- mindestens eine Amino- und Amidogruppe,
- mindestens eine Amino-, Amido-, und Polyalkylenoxidgruppe oder
- mindestens eine quaternäre Ammonium-, Amino-, Amido- und Polyalkylenoxidgruppe auf.

Die mindestens eine funktionelle Gruppe kann lateral in seitlicher Position zum Polysiloxan-Rückgrat, terminal am Ende des Polysiloxan-Rückgrats und/oder im Polysiloxan-Rückgrat der Komponente (II) vorliegen. Eine Funktionalisierung von Organopolysiloxan-Verbindungen kann über dem Fachmann bekannte Methoden erfolgen. Hierzu zählen beispielsweise Hydrosilylierungsreaktionen, Additionsreaktionen an Epoxygruppentragende Organopolysiloxane, Umsetzungsreaktionen mit Isocyanatverbindungen, und Quaternisierungsreaktionen.

Geeignete quaternäre Ammoniumgruppen besitzen beispielsweise folgende Struktur 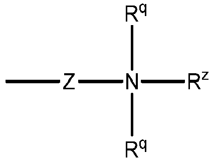
wobei R^{q} unabhängig voneinander Wasserstoff, ein Alkyl-, Aryl-, Aralkylrest oder ein cycloaliphatischer Rest mit 1- 20 Kohlenstoffatomen sein kann, gegebenenfalls umfassend ein oder mehrere Heteroatome und/oder eine oder mehrere funktionelle Gruppen wie eine oder mehrere Hydroxy-, Amido-, Urethan-, Harnstoff- und/oder Estergruppen;
Z ein zweiwertiger geradkettiger, cyclischer oder verzweigter Kohlenwasserstoffrest sein kann, der durch 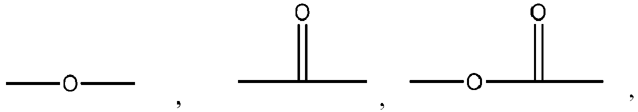 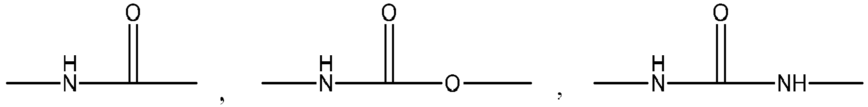
unterbrochen und mit-OH substituiert sein kann; und
R^{z} entweder gleich R^{q} ist, oder gegebenenfalls auch gleich -Z- sein kann, sofern sich die quaternäre Ammoniumgruppe im Polymerrückgrat befindet.

Geeignete Aminogruppen können primäre, sekundäre und/oder tertiäre Aminogruppen sein. Insbesondere geeignet sind Aminpropyl-, Aminoethylaminopropyl-, Aminophenyl-, Phenylaminopropyl-, Aminoethylaminoisobutyl-, Diethylentriaminpropyl-, Vinylbenzylethylendiaminpropyl-, Benzylethylendiaminpropyl- und Additionsprodukte von primären oder sekundären Aminen an epoxy-modifizierte Polysiloxane.

Geeignete Polyalkylenoxidgruppen werden z.B. durch Anlagerung von Ethylenoxid, Propylenoxid, und/oder Tetramethylenoxid an Alkohole erhalten. Die Alkylenoxidgruppen können dabei in blockartiger oder statistischer Verteilung vorliegen. Die Verknüpfung an das Polysiloxan kann dabei z.B. über eine Hydrosilylierungs-, Epoxid-Ringöffnungs-, Veresterungs-, Amidierungs- und/oder Isocyanatreaktion erfolgen.

Der Gehalt an Polyalkylenoxidgruppen in Komponente (II) kann 0 - 60 Gew.%, bevorzugt 0 - 40 Gew.%, besonders bevorzugt 0- 20 Gew.% bezogen auf das Gesamtgewicht von Komponente (II) betragen.

Geeignete Amidogruppen sind beispielsweise durch Umsetzung der oben genannten primären und sekundären Amine mit Carbonsäurederivaten erhältlich. Beispiele für Carbonsäurederivate sind Carbonsäureester, wie beispielsweise Methyl- oder Ethylcarbonsäureester, oder cyclische Lactone wie beispielsweise Butyrolacton, Carbonsäureanhydride, wie beispielswiese Eissigsäureanhydrid oder Carbonsäurehalogenide, wie Carbonsäurechloride oder Carbonsäurebromide, oder mit Dicyclohexylcarbodiimid (DCC) aktivierte Carbonsäurederivate sogenannte O-Acylisoharnstoffe oder anderen Aktivestern.

Der Stickstoffgehalt in Komponente (II) kann 0,05-2 Gew.%, bevorzugt 0,10- 1,5 Gew.%, besonders bevorzugt 0,10 - 1,0 Gew.% unter der Berücksichtigung der ggf. vorhandenen Amino-, Amido und Ammoniumgruppen betragen. Der Stickstoffgehalt kann z.B. mit der Kjeldahl Methode bestimmt werden.

Die Komponente (II) kann ein Molekulargewicht von 500 - 50000 g/mol, bevorzugt 1000 - 20000, besonders bevorzugt von 1500 - 10000 g/mol aufweist.

Bevorzugt ist Komponente (II) ein Weichgriffmittel. Ein Weichgriffmittel im Sinne der vorliegenden Erfindung ist eine Verbindung, die einem damit ausgerüsteten Substrat, insbesondere einem Textil, einen weichen Griff verleiht.

Ferner kann die Komponente (II) im Saugfähigkeitstest gemäß AATCC 79 eine Einsinkzeit auf Baumwolle von 0,1 - 30 sec, bevorzugt 0,1 -10 sec, besonders bevorzugt 0,1 - 3 sec bewirken. Die Saugfähigkeit wird gemessen, indem das Organopolysiloxan in einem Lösungsmittel oder Lösungsmittelgemisch vollständig gelöst wird. Als Lösungsmittel können Wasser, Methanol, Ethanol, Isopropanol, Aceton, Methylethylketon, Methylpropylketon, Ethylacetat, Isoproylacetat und/oder Kohlenwasserstofflösungsmittel verwendet werden. Die Konzentration der Lösung wird auf 1,0% Feststoffgehalt eingestellt. Anschließend werden jeweils 100 ml dieser Lösung in ein Becherglas gefüllt und das entsprechend AATCC 79 standardisierte Baumwollgewebe (200 ± 5 x 200 ± 5 mm) vollständig eingetaucht. Das behandelte Gewebe wird danach in einem Foulard durch zwei Abquetschwalzen durchgeführt um überschüssige Lösung zu entfernen. Dabei wird der Abquetschdruck so gewählt, dass eine Flottenaufnahme von ca. 80 % erreicht wird. Die ausgerüsteten Baumwollmuster werden dann zunächst bei Raumtemperatur 24 h im Abzug getrocknet und anschließend 1 min bei 140 °C auf einem Labor-Spannrahmentrockner nachgetrocknet.

Zur Beurteilung der Saugfähigkeit werden 20 µl vollentmineralisiertes Wasser aus einer definierten Höhe von 40 mm auf das Textil getropft. Anschließend wird die Zeit gemessen bis der Tropfen vollständig eingesunken ist.

Die in Tabelle 1 dargestellte Beurteilung wurde für die Charakterisierung von Verbindungen bezüglich ihres Einflusses auf die Saugfähigkeit nach obigem Test angewendet.

**Tabelle 1: Einteilung von Verbindungen nach ihrer Saugfähigkeit.**

| **Saugfähigkeit** | **Einsinkzeit** |
|---|---|
| sehr hoch | ≤ 3 sec |
| hoch | > 3 - 30 sec |
| neutral | > 30 - 70 sec |
| niedrig | > 70 - 120 sec |
| sehr niedrig | > 120 sec |

Bevorzugt bewirkt Komponente (II) eine hohe Saugfähigkeit, insbesondere eine sehr hohe Saugfähigkeit, eines damit behandelten Substrats bestimmt gemäß AATCC 79 und obiger Tabelle 1.

Komponente (II) ist bevorzugt in einer solchen Menge in der erfindungsgemäßen Zusammensetzung enthalten, dass die Zusammensetzung eine hohe Saugfähigkeit, insbesondere eine sehr hohe Saugfähigkeit, eines damit behandelten Substrats bestimmt gemäß AATCC 79 und obiger Tabelle 1 bewirkt.

Die erfindungsgemäße Zusammensetzung kann ferner (III) einen Emulgator umfassen. Die Komponente (III) kann beispielsweise einen kationischen, amphoteren oder nichtionischen Emulgator umfasst. Vorzugsweise umfasst Komponente (III) mindestens einen kationischen Emulgator und/oder ein Ethoxylierungsprodukt eines aliphatischen Alkoholes mit 6 bis 22 Kohlenstoffatomen, das einen Ethylenoxidgehalt bis zu 50 Mol aufweist.

In einer Ausführungsform umfasst die Komponente (III) ein Alkoxylierungsprodukt, insbesondere ein Ethoxylat oder Propoxylat, eines aliphatischen Alkohols mit 6 bis 22 Kohlenstoffatomen, bevorzugt 8 bis 16 Kohlenstoffatomen. Geeignete Alkohole können gesättigt, linear oder verzweigt, vorzugsweise verzweigt sein und können allein oder in Mischung zur Anwendung gelangen. Insbesondere umfasst Komponente (II) ein Alkoxylierungsprodukt, insbesondere ein Ethoxylat oder Propoxylat, eines verzweigten aliphatischen Alkohols. Ein geeigneter Alkoxylierungsgehalt kann bis zu 50 Mol, bevorzugt 2 bis 50 Mol, insbesondere 3 bis 15 Mol betragen.

Von besonderem Vorteil hinsichtlich niedriger Schaumentwicklung in den Anwendungsflotten sind Alkoxylierungsprodukte eines aliphatischen Alkohols mit 6 bis 22 Kohlenstoffatomen, wenn Alkylenoxidreste aus Ethylenoxid und 1,2-Propylenoxid in statistischer Verteilung und vorzugsweise in blockartiger Verteilung vorliegen. Nichtionogene Emulgatoren aus der Gruppe der ethoxylierten, verzweigten aliphatischen Alkohole sind aufgrund ihrer günstigen Gesamteigenschaften besonders bevorzugt. Insbesondere bevorzugt umfasst die Komponente (III) ein Ethoxylat von 2,6,8-Trimethyl-4-nonanol, Isodecylalkohol oder Isotridecylalkohol mit einem Ethylenoxidgehalt von 2 bis 50 Mol, insbesondere 3 bis 15 Mol.

In einer Ausführungsform umfasst die Komponente (III) mindestens einen kationischen Emulgator. Geeignete kationische Emulgatoren sind quaternäre Ammoniumsalze, bevorzugt Di-(C₁₀-C₂₄)-Alkyldimethylammoniumchlorid, (C₁₀-C₂₄)-Alkyldimethylethylammoniumchlorid oder- bromid, (C₁₀-C₂₄)-Alkyltrimethylammoniumchlorid oder -bromid, (C₁₀-C₂₄)-Alkyldimethylbenzylammoniumchlorid, N-(C₁₀-C₁₈)-Alkylpyridiniumchlorid oder -bromid, N-(C₁₂-C₁₈)-isochinoliniumchlorid, -bromid oder -monoalkylsulfat, N-(C₁₂-C₁₈)-Alkyl-N-methyl-ammounium-morpholinium-chlorid, -bromid oder -monoalkylsulfat, N-(C₁₂-C₁₈)-Alkyl-N-ethyl-ammounium-morpholinium-chlorid, -bromid oder -monoalkylsulfat, N-(C₁₂-C₁₈)-Alkylmethylpolyoxyethylenammoniumchlorid,-bromid oder -monoalkylsulfat, ein Salz eines primären, sekundären oder tertiären Fettamins, das 8 bis 24 Kohlenstoffatomen aufweist, mit einer organischen Säure, wie Essigsäure, Milchsäure, Glycolsäure oder Zitronensäure, oder einer anorganischen Säure, wie Salzsäure, Schwefelsäure und Phosphorsäure, oder eine Mischung davon.

Der Gehalt an Komponente (III) kann 0-20 Gew.%, bevorzugt 1-15 Gew.%, besonders bevorzugt 2-10 Gew.%, bezogen auf das Gesamtgewicht der Zusammensetzung betragen.

Ferner umfasst die erfindungsgemäße Zusammensetzung (IV) Wasser. Der Gehalt an Wasser kann bis zu 98 Gew.%, bevorzugt 25-92,5 Gew.%, besonders bevorzugt 49-84 Gew.% bezogen auf das Gesamtgewicht der Zusammensetzung betragen.

Die erfindungsgemäße Zusammensetzung kann ferner (V) ein organisches Lösungsmittel umfassen. Die Komponente (V) kann auch eine Mischung der hierin beschriebenen organischen Lösungsmittel umfassen. Der Gehalt an Komponente (V) kann 0-20 Gew.%, bevorzugt 1-10 Gew.%, besonders bevorzugt 2-6 Gew.% bezogen auf das Gesamtgewicht der Zusammensetzung betragen.

Geeignete organische Lösungsmittel sind beispielsweise monofunktionelle oder polyfunktionelle Alkohol, die insbesondere 2 - 10, bevorzugt 2 - 6, stärker bevorzugt 2 - 4 Kohlenstoffatome aufweisen. Monofunktionelle Alkohole umfassen eine Hydroxygruppe pro Alkoholmolekül. Polyfunktionelle Alkohole umfassen mindestens zwei, wie beispielsweise zwei bis fünf Hydroxygruppen pro Alkoholmolekül. In einer bevorzugten Ausführungsform ist das organische Lösungsmittel Methanol, Ethanol, Isopropanol und/oder einen Dialkohol mit 2-10 Kohlenstoffatomen.

Auch Mono- und Diether, insbesondere Mono- und Dialkylether, sowie Mono- und Diester, wie Alkylester, dieser Dialkohole sind geeignet. In einer Ausführungsform umfasst Komponente (V) Butyldiglykol, 1,2-Propylenglykol, Dipropylenglykol, Dipropylenglykolmonomethylether, Dipropylenglykolmonobutylether, Tripropylenglykolmonobutylether oder eine Mischung davon.

Die erfindungsgemäße Zusammensetzung kann ferner (VI) eine mono- oder polyfunktionelle Carbonsäure mit 1-5 Kohlenstoffatomen umfassen. Monofunktionelle Carbonsäuren umfassen eine Carboxygruppe pro Säuremolekül. Polyfunktionelle Carbonsäuren umfassen mindestens zwei Carboxygruppen, insbesondere 2 oder 3 Carboxygruppen pro Säuremolekül. Insbesondere ist Komponente (VI) ausgewählt aus Ameisensäure, Essigsäure, Propansäure, Butansäure, Pentansäure, Milchsäure, Zitronensäure, Maleinsäure, Fumarsäure, Bernsteinsäure, Brenztraubensäure, Polyhydroxycarbonsäuren und Mischungen davon. In einer bevorzugten Ausführungsform umfass Komponente (VI) Essigsäure, Milchsäure oder Zitronensäure.

Der Gehalt an Komponente (VI) kann 0-10 Gew.%, bevorzugt 0,5-5 Gew.%, besonders bevorzugt 1-5 Gew.% bezogen auf das Gesamtgewicht der Zusammensetzung betragen.

In einer Ausführungsform umfasst die erfindungsgemäße Zusammensetzung:
1-25 Gew.%, bevorzugt 1-15 Gew.%, besonders bevorzugt 1-10 Gew.% der Komponente (I),
1-50 Gew.%, bevorzugt 5-30 Gew.%, besonders bevorzugt 10-20 Gew.% der Komponente (II), und
bis zu 98 Gew.%, bevorzugt 25-92,5 Gew.%, besonders bevorzugt 49-84 Gew.% Wasser, jeweils bezogen auf das Gesamtgewicht der Zusammensetzung.

In einer bevorzugten Ausführungsform umfasst die erfindungsgemäße Zusammensetzung:
1-25 Gew.%, bevorzugt 1-15 Gew.%, besonders bevorzugt 1-10 Gew.% der Komponente (I),
1-50 Gew.%, bevorzugt 5-30 Gew.%, besonders bevorzugt 10-20 Gew.% der Komponente (II),
bis zu 20 Gew.%, bevorzugt 1-15 Gew.%, besonders bevorzugt 2-10 Gew.% der Komponente (III),
bis zu 98 Gew.%, bevorzugt 25-92,5 Gew.%, besonders bevorzugt 49-84 Gew.% Wasser,
bis zu 20 Gew.%, bevorzugt 1-10 Gew.%, besonders bevorzugt 2-6 Gew.%, der Komponente (V) und
bis zu 10 Gew.%, bevorzugt 0,5-5 Gew.%, besonders bevorzugt 1-5 Gew.% der Komponente (VI), jeweils bezogen auf das Gesamtgewicht der Zusammensetzung.

Es wurde überraschend gefunden, dass die erfindungsgemäße Zusammensetzung sowohl eine hohe antimikrobielle/antivirale Wirkung als auch einen hohen Weichgriff verleiht. Im Gegensatz zu aus dem Stand der Technik bekannten Zusammensetzungen, die nur eine der beiden Anforderungen zufriedenstellend erfüllen können, erlaubt die erfindungsgemäße Zusammensetzung, Weichgriff und antimikrobielle/antivirale Wirkung in hohem Maße zu kombinieren.

Zudem weist die Zusammensetzung eine hohe Waschpermanenz auf. Selbst nach mehrfacher Wäsche behalten damit behandelte Substrate, wie Textilien, eine hohe antimikrobielle/antivirale Eigenschaft oder weisen sogar einen verbesserten antimikrobiellen/antiviralen Effekt auf.

In einem weiteren Aspekt betrifft die vorliegende Erfindung ein Verfahren zur Herstellung einer erfindungsgemäßen Zusammensetzung, umfassend
a) Mischen der Komponenten (I), (II), ggf. (III), ggf. (V) und ggf. (VI) und
b) ggf. Zugeben von (VI) Wasser zu der in Schritt a) erhaltenen Mischung.

Die Komponenten (I), (II), (III), (VI), (V) und (VI) sind wie hierin definiert.

Die erfindungsgemäße Zubereitung kann durch Emulgierverfahren hergestellt werden, die dem Fachmann bekannt sind. Bevorzugt werden die Einzelkomponenten (I), (II), ggf. (III), ggf. (V) und ggf. (VI) unter Rühren in Schritt a) miteinander vermischt. Es kann zweckmäßig sein, die Komponenten (I), (II), ggf. (III) und ggf. (V) unter Rühren bei erhöhter Temperatur, d.h. höher als Raumtemperatur (20°C), zu vermischen.

Schritt a) kann in Gegenwart einer geringen Menge organischer Säure (Komponente (VI), zum Beispiel Essigsäure oder Milchsäure, erfolgen.

Eine geeignete Menge an Komponente (VI) kann beispielsweise in einem Gehalt der Komponente (VI) in der erfindungsgemäßen Zusammensetzung von bis zu 10 Gew.%, bevorzugt 0,5-5 Gew.%, besonders bevorzugt 1-5 Gew.% bezogen auf das Gesamtgewicht der Zusammensetzung resultieren.

Eine erhöhte Temperatur und/oder eine Zugabe von Komponente (VI) in Schritt a) kann dabei helfen, das Polymer (Komponente II) in die aus wässrigem Medium bevorzugt anwendbare Form einer Emulsion zu bringen.

In einem weiteren Aspekt betrifft die vorliegende Erfindung eine Verwendung der erfindungsgemäßen Zusammensetzung zur Ausrüstung eines Textils, d.h. eines textilen Substrats. Insbesondere kann die erfindungsgemäße Zusammensetzung zur antimikrobiellen und/oder antiviralen Ausrüstung eines Textils verwendet werden. Die erfindungsgemäße Zusammensetzung eignet sich beispielsweise zur Verwendung bei der Veredlung textiler Substrate in wässrigen Bädern und Anwendungsflotten.

Das Textil kann ausgewählt sein aus Geweben, Gewirken, Geflechten und Textilverbunden aus nativen Fasern, wie beispielsweise Baumwolle- oder Wollfasern, aber auch aus synthetischen Fasern, wie beispielsweise Viskose-, Polyester-, Polyamid- oder Polyacrylnitrilfasern. Bei der Anwendung auf textilen Substraten können die erfindungsgemäßen Zubereitungen auch mit den in der Textilindustrie üblichen Textilhilfsmitteln kombiniert werden, wie beispielsweise Mittel, welche die Entknitterungseigenschaften verbessern, z.B. Methylolverbindungen des Dihydroxyethylenharnstoffes oder Methylolmelaminether unterschiedlichen Methylolierungsgrades.

In einem weiteren Aspekt betrifft die vorliegende Erfindung ein Verfahren zur Ausrüstung eines Textils, umfassend
Applizieren der erfindungsgemäßen Zusammensetzung auf ein Textil und
ggf. Trocknen des so behandelten Textils.

Das Textil kann wie hierin definiert sein. Das Applizieren der erfindungsgemäßen Zusammensetzung kann in einer Menge von 0,2-5 Trockengew.%, bevorzugt 1-3 Trockengew.% der Komponenten (I), (II) und ggf. (III) bezogen auf das Gewicht des Textils erfolgen.

Üblicherweise wird eine Flotte der erfindungsgemäßen Zusammensetzung in der gewünschten Konzentration mittels einer Zwangsapplikation aus wässrigem Medium durch Foulard-, Sprüh-, Pflatsch-, Schaumauftrag vorgenommen. Die Flottenaufnahmen kann zwischen 40 und 100 % liegen.

Gegebenenfalls kann das Verfahren ein anschließendes Trocknen des behandelten Textils, insbesondere bei einer Temperatur von 80-150°C umfassen. In einer Ausführungsform umfasst der Trocknungsschritt eine Vortrocknung bei 80 - 110°C und danach eine Hitzebehandlung bei 130 - 150°C. Die Dauer der Hitzebehandlung ist jeweils abhängig von den angewandten Temperaturen und beträgt bevorzugt 1 - 5 Minuten.

In einem weiteren Aspekt betrifft die vorliegende Erfindung ein Produkt, erhältlich durch ein erfindungsgemäßes Ausrüstungsverfahren.

Es wurde überraschend gefunden, dass das erfindungsgemäße Produkt, d.h. das ausgerüstete Textil, sowohl eine hohe antimikrobielle/antivirale Eigenschaft als auch einen hohen Weichgriff aufweist. Im Gegensatz zu aus dem Stand der Technik bekannten Textilien, die nur eine der beiden Anforderungen zufriedenstellend erfüllen können, erlaubt die erfindungsgemäße Zusammensetzung, Weichgriff und antimikrobielle/antivirale Wirkung des ausgerüsteten Textils in hohem Maße zu kombinieren.

Zudem sind die antimikrobielle/antiviralen Eigenschaft und der Weichgriff des erfindungsgemäßen Produkts in hohem Maße waschpermanent. Selbst nach mehrfacher Wäsche behalten die ausgerüsteten Textilien eine hohe antimikrobielle/antivirale Eigenschaft oder weisen sogar einen verbesserten antimikrobiellen/antiviralen Effekt auf.

### Beispiele

Die vorliegende Erfindung wird anhand der folgenden Beispiele näher erläutert, ist jedoch nicht darauf beschränkt.

### Ausführungsbeispiel 1 (AB 1):

### Synthese Komponente (II):

*N*,*N*-Dimethylbutylamin (2,53 g, 25 mmol), ein mit Allylglycidylether terminiertes Polydimethylsiloxan mit einer durchschnittlichen Kettenlänge von ca. 55 Wiederholungseinheiten (71,3 g, 25 mmol Epoxid) und Milchsäure (2,25 g, 25 mmol) wurden in einem Dreihalskolben mit Thermometer und KPG-Rührwerk vorgelegt, in 1,2-Propylenglykol (Komponente (V)) (20 g) gelöst und 3 h bei 90 °C gerührt. Die Epoxidkonzentration wurde titrimetrisch kontrolliert. Es entstand eine hochviskose klare, farblose Flüssigkeit (Komponente (II) und (V)).

### Formulierung:

Die Reaktionsmischung (Komponente (II) und Komponente (V)) (20 g) wurden mit Dimethyloctadecyl[3-(trimethoxysilyl)propyl]ammoniumchlorid (Komponente (I)) (70 Gew.% in Methanol, 6 g) und einem Fettalkoholethoxylat 10 EO (Komponente (III)) (8 g) sowie Essigsäure (Komponente (VI)) (60 %; 2 g) in einem Becherglas gemischt. Vollentsalztes Wasser (70,6 g) wurde in kleinen Portionen innerhalb von 10 min unter Rühren zugegeben bis eine klare Lösung entstand.

### Ausführungsbeispiel 2 (AB 2):

### Synthese Komponente (II):

*N*,*N*-Dimethyloctylamin (3,93 g, 25 mmol), ein mit Allylglycidylether terminiertes Polydimethylsiloxan mit einer durchschnittlichen Kettenlänge von ca. 55 Wiederholungseinheiten (71,3 g, 25 mmol Epoxid) und Milchsäure (2,25 g, 25 mmol) wurden in einem Dreihalskolben mit Thermometer und KPG-Rührwerk vorgelegt, in 1,2-Propylenglykol (Komponente (V)) (20 g) gelöst und 3 h bei 90 °C gerührt. Die Epoxidkonzentration wurde titrimetrisch kontrolliert. Es entstand eine hochviskose klare, farblose Flüssigkeit (Komponente (II) und (V))

### Formulierung:

Die Reaktionsmischung (Komponente (II) und Komponente (V)) (20 g) wurde im nächsten Schritt mit Dimethyloctadecyl[3-(trimethoxysilyl)propyl]ammoniumchlorid (Komponente (I)) (70 Gew.% in Methanol, 6 g) und einem Fettalkoholethoxylat 10 EO (Komponente (III)) (8 g) sowie Essigsäure (Komponente (VI)) (60 %; 2 g) in einem Becherglas gemischt. Vollentsalztes Wasser (70,6 g) wurde in kleinen Portionen innerhalb von 10 min unter Rühren zugegeben bis eine klare Lösung entstand.

### Ausführungsbeispiel 3 (AB 3):

### Synthese Komponente (II):

*N*,*N*-Dimethyllaurylamin (5,34 g, 25 mmol), ein mit Allylglycidylether terminiertes Polydimethylsiloxan mit einer durchschnittlichen Kettenlänge von ca. 55 Wiederholungseinheiten (71,3 g, 25 mmol Epoxid) und Milchsäure (2,25 g, 25 mmol) wurden in einem Dreihalskolben mit Thermometer und KPG-Rührwerk vorgelegt, in 1,2-Propylenglykol (Komponente (V)) (20 g) gelöst und 3 h bei 90 °C gerührt. Die Epoxidkonzentration wurde titrimetrisch kontrolliert. Es entstand eine hochviskose klare, farblose Flüssigkeit (Komponente (II) und (V)).

### Formulierung:

Die Reaktionsmischung (Komponente (II) und Komponente (V)) (20 g) wurde im nächsten Schritt mit Dimethyloctadecyl[3-(trimethoxysilyl)propyl]ammoniumchlorid (Komponente (I)) (70 Gew.% in Methanol, 6 g) und einem Fettalkoholethoxylat 10 EO (Komponente (III) (8 g) sowie Essigsäure (Komponente (VI)) (60 %; 2 g) in einem Becherglas gemischt. Vollentsalztes Wasser (70,6 g) wurde in kleinen Portionen innerhalb von 10 min unter Rühren zugegeben bis eine klare Lösung entstand.

### Ausführungsbeispiel 4 (AB 4):

### Synthese Komponente (II):

Stearyldimethylamin (6,75 g, 25 mmol), ein mit Allylglycidylether terminiertes Polydimethylsiloxan mit einer durchschnittlichen Kettenlänge von ca. 55 Wiederholungseinheiten (71,3 g, 25 mmol Epoxid) und Eisessig (1,5 g, 25 mmol) wurden in einem Dreihalskolben mit Thermometer und KPG-Rührwerk vorgelegt, in 1,2-Propylenglykol (Komponente (V)) (20 g) gelöst und 3 h bei 90 °C gerührt. Die Epoxidkonzentration wurde titrimetrisch kontrolliert. Es entstand eine hochviskose klare, farblose Flüssigkeit (Komponente (II) und (V)).

### Formulierung:

Die Reaktionsmischung (Komponente (II) und Komponente (V) (20 g) wurden im nächsten Schritt mit Dimethyloctadecyl[3-(trimethoxysilyl)propyl]ammoniumchlorid (Komponente (I)) (70 Gew.% in Methanol, 6 g) und einem Fettalkoholethoxylat 10 EO (Komponente (III)) (8 g) sowie Essigsäure (Komponente (VI)) (60 %; 2 g) in einem Becherglas gemischt. Vollentsalztes Wasser (70,6 g) wurde in kleinen Portionen innerhalb von 10 min unter Rühren zugegeben bis eine klare Lösung entsteht.

### Ausführungsbeispiel 5 (AB 5):

### Synthese Komponente (II):

Die Herstellung des ammonium- und polyethermodifizierten Organopolysiloxans erfolgte durch Umsetzung von 199,0 Gramm (0,2 mol Epoxidgehalt) α,ω-Diepoxypolydimethylsiloxan mit 10,0 Gramm (0,1 mol) N-Methylpiperazin analog zu DE-OS 1493384 (Beispiel 1). Anschließend addierte man analog zu US 6,495,727 (Beispiel 1) 56,6 Gramm (0,1 mol) eines Isodecylalkohols mit 4 EO Einheiten und 4 PO Einheiten.

### Formulierung:

Das so hergestellte Polydimethylsiloxan (Komponente (II)) (16 g) wurde im nächsten Schritt mit 1,2-Propylenglycol (Komponente (V)) (4 g), Dimethyloctadecyl[3-(trimethoxysilyl)propyl]ammoniumchlorid (Komponente (I)) (70 Gew.% in Methanol, 6 g) und einem Fettalkoholethoxylat 10 EO (Komponente (III)) (8 g) sowie Essigsäure (Komponente (VI)) (60 %; 2 g) in einem Becherglas gemischt. Vollentsalztes Wasser (70,6 g) wurde in kleinen Portionen innerhalb von 10 min unter Rühren zugegeben bis eine klare Lösung entstand.

### Vergleichsbeispiel (VB 1):

Ein Aminoethylaminopropyl-Seitenketten modifiziertes Polydimethylsiloxan (20 g) mit einer Dielektrizitätskonstante von 2,86 wurde mit Dimethyloctadecyl[3-(trimethoxysilyl)propyl]ammoniumchlorid (70 Gew.% in Methanol, 6 g), einem Fettalkoholethoxylat 10 EO (8 g) und Essigsäure (60 %; 2 g) in einem Becherglas gemischt. Vollentsalztes Wasser wurde unter Rühren innerhalb von 10 Minuten hinzugegeben bis eine klare Lösung entstand.

**Tabelle 2: Eigenschaften der in AB1-5 und VB1 erhaltenen Zusammensetzungen.**

| **Beispiel** | **AB 1** | | **AB 2** | | **AB 3** | | **AB 4** | | **AB 5** | | **VB 1** | |
|---|---|---|---|---|---|---|---|---|---|---|---|---|
| **Dielektrizitätskonstante¹** | 3,65 | | 3,19 | | 3,05 | | 3,30 | | 5,73 | | 2,86 | |
| **Wäschen** | 0 | 5 | 0 | 5 | 0 | 5 | 0 | 5 | 0 | 5 | 0 | 5 |
| **Antibakterielle Aktivität gem. ISO 20743²** | 3,21 | 4,02 | 2,87 | 2,76 | 3,52 | 4,50 | 2,94 | 2,52 | 3,13 | 2,65 | 3,86 | 0,71 |
| **Einsinkzeit [s]³** | 7 | | 4 | | 15 | | 9 | | 3 | | >300 | |
| **Einsinkzeit [s]⁴** | 2 | | 1 | | 3 | | 2 | | 1 | | 74 | |
| **Weichgriff⁵** | 3,75 | | 3,875 | | 3,375 | | 3,5 | | 3,625 | | 4 | |

| | | | | | | | | | | | | |
|---|---|---|---|---|---|---|---|---|---|---|---|---|
| ¹Bestimmung erfolgte an den reinen Organopolysiloxanen (Komponente (II)) ² Bestimmung auf ausgerüsteter Ware gemäß Ausrüstungsvorschrift. Ware wurde mit den Formulierungen der Ausführungsbeispiele ausgerüstet. ³Bestimmung der Einsinkzeit der mit den reinen Organopolysiloxanen (Komponente (II)) ausgerüsteten Textilien ⁴Bestimmung der Einsinkzeit der mit den Formulierungen der AB1-4 ausgerüsteten Textilien ⁵Weichgriffberteilung gemäß Tabelle 3 und 4 | | | | | | | | | | | | |

### ¹Bestimmung der Dielektrizitätskonstante:

Die Bestimmung erfolgte an den Organopolysiloxanen (Komponente (II)) in Reinsubstanz in Anlehnung an DIN EN 60247 (vgl. Nihon Rufuto Co., Ltd., Liquid Dielectric Constant Meter Model 871, Operation Manual Version 1.0 2008).

Das Messgerät Model 871 der Fa. Nihon Rufuto Co. besitzt eine Messelektrode bestehend aus einem äußeren und inneren Zylinder. Die Messungen wurden bei 25 °C durchgeführt. Das Messsignal ist eine reine Sinuswelle mit geringer Verzerrung und einer Frequenz von 10 kHz. Die Amplitude betrug 7 V rms (quadratisches Mittel).

Angebracht an den äußeren Zylinder wird bei der Messung der Stromfluss durch die Flüssigkeit zwischen beiden Zylindern gemessen. Mittels einer stabilen Spannungsquelle und sehr präzise bestimmten Parametern der Messelektrode wird dieses Signal in die Dielektrizitätskonstante (Permittivität) der Flüssigkeit umgerechnet.

### ²Bestimmung der antibakteriellen Aktivität gemäß ISO 20743:

100 g der Lösungen aus Ausführungsbeispiel 1 bis 5 bzw. der Lösung aus Vergleichsbeispiel 1 wurden jeweils mit 899 g Wasser verdünnt und 1 g Essigsäure (60%) wurde zugegeben. Nach Aufrühren wurden diese Verdünnungen (Flotten) mittels Foulard-Verfahren (2 bar) jeweils auf zwei Textilmuster (DIN A4, Maschenware, Baumwolle, unbehandelt) ausgerüstet und für 2 min bei 120 °C getrocknet. Eines der beiden Textilmuster der Ausführungsbeispiele 1 bis 5 bzw. VB1 wurden gemäß DIN 26330 fünf Mal gewaschen (40 °C, Waschmittel: IEC 60456 Base detergent Type A, phosphate free, letzte Wäsche wurde ohne Waschmittel durchgeführt. Textil wurde bei Raumtemperatur getrocknet).

Die Textilmuster im ungewaschenen Zustand und im Zustand nach 5 Wäschen wurden gemäß ISO 20743 mit einer Inkubationszeit von 24 h auf ihre antibakterielle Wirkung getestet und gegen die originalen Textilien im unausgerüsteten Zustand referenziert, um den antibakteriellen Effekt der Ausrüstung zu quantifizieren. Als Testkeim wurde Staphylococcus aureus ATCC 6538 verwendet.

### ²Bestimmung der Saugfähigkeit der reinen Organopolysiloxane (Komponente (II)) in Anlehnung an AATCC 79:

Von den reinen Organopolysiloxanen der Ausführungsbeispiele 1 bis 5 sowie des Vergleichsbeispiels 1 wurden 1%-Lösungen in *i*-Propanol hergestellt. Diese Lösungen wurden im Foulard-Verfahren auf Baumwolle (DIN A4, Frottee, unbehandelt) ausgerüstet und bei Raumtemperatur für 24 h getrocknet und danach bei 140°C für 1 min thermisch behandelt, um das Lösungsmittel zu entfernen. Auf dem Textil verblieben die reinen Organopolysiloxane. Anschließend wurde ein Wassertropfen aus definierter Höhe von 40 ± 1,0 mm auf das Textil getropft und die Zeit bis zum Einsinken des Tropfens gemessen.

### ⁴Bestimmung der Saugfähigkeit von Textilien ausgerüstet mit Formulierungen der Ausführungsbeispiele 1-5 in Anlehnung an AATCC 79:

40 g der Formulierungen der Ausführungsbeispiel 1 bis 5 wurden mit 959 g Wasser verdünnt und 1 g Essigsäure (60%) zugegeben. Nach Aufrühren wurden diese Verdünnungen (Flotten) mittels Foulard-Verfahren (2 bar) auf Baumwolle (DIN A4, Frottee, unbehandelt) ausgerüstet und für 1 min bei 140 °C getrocknet. Anschließend wurde ein Wassertropfen aus einer Höhe von 40 ± 1,0 mm aufs Textil getropft und die Zeit bis zum Einsinken des Tropfens gemessen.

Die Ausrüstung mit Dimethyloctadecyl[3-(trimethoxysilyl)propyl]ammoniumchlorid (Komponente (I)) mit einer Flottenkonzentration von 2,25 g/L (Wirkstoffgleich zu den 40 g/L Ausrüstungen der Ausführungsbeispiele 1-5) ergab eine Einsinkzeit von >180 sec.

### ⁵Beurteilung des Weichgriffs:

Um den Weichgriff der erfindungsgemäßen Zusammensetzung zu untersuchen und um heraus zu finden, inwiefern Komponente (I) den Weichgriff von Textilien die mit den Organopolysiloxanen ausgerüstet wurden, beeinflusst, wurden Griffexperimente mit trainierten Probanden durchgeführt.

Die Weichgriffeigenschaften wurden wie in Tabelle 3 dargestellt klassifiziert.

**Tabelle 3: Weichgriffklassifizierung.**

| **Beurteilung** | **Weichgriff** |
|---|---|
| Note 1 | Weichgriff unverändert gegenüber unbehandelt |
| Note 2 | Weichgriff geringfügig verbessert gegenüber unbehandelt |
| Note 3 | Weichgriff deutlich verbessert gegenüber unbehandelt |
| Note 4 | sehr guter Weichgriff |

Frottee-Textilien, die mit den Formulierungen der Ausführungsbeispiele 1 bis 5 (für Details der Ausrüstung siehe ⁴Bestimmung der Saugfähigkeit von Textilien ausgerüstet mit Formulierungen der Ausführungsbeispiele 1-5 in Anlehnung an AATCC 79) bzw. Vergleichsbeispiel 1 ausgerüstet wurden, wurden in separaten Serien mit jeweils 3 Frottee-Textilien verglichen, die wie folgt ausgerüstet wurden:
1. Komponente I und V: Dimethyloctadecyl[3-(trimethoxysilyl)propyl]ammoniumchlorid (70 Gew.% in Methanol, 6 g) wurde mit Essigsäure (60%, 2 g) und vollentsalztem Wasser (92 g) unter Rühren gemischt bis eine klare Lösung entstand. 40 g dieser Lösung wurde mit 959 g Wasser verdünnt und 1 g Essigsäure (60%) zugegeben. Nach Aufrühren wurden diese Verdünnungen (Flotten) mittels Foulard-Verfahren (2 bar) auf ein Textilmuster (DIN A4, Frottee, Baumwolle, unbehandelt) ausgerüstet und für 2 min bei 140 °C getrocknet.
2. Komponente I, III und V: Dimethyloctadecyl[3-(trimethoxysilyl)propyl]ammoniumchlorid (70 Gew.% in Methanol, 6 g) wurde mit einem Fettalkoholethoxylat (8 g), Essigsäure (60%, 2 g) und vollentsalztem Wasser (84 g) unter Rühren gemischt bis eine klare Lösung entstand. 40 g dieser Lösung wurde mit 959 g Wasser verdünnt und 1 g Essigsäure (60%) zugegeben. Nach Aufrühren wurden diese Verdünnungen (Flotten) mittels Foulard-Verfahren (2 bar) auf ein Textilmuster (DIN A4, Frottee, Baumwolle, unbehandelt) ausgerüstet und für 2 min bei 140 °C getrocknet.
3. Komponente II, III, IV und V: Die Polydimethylsiloxane gelöst in 1,2-Propylenglykol der Ausführungsbeispiele 1 bis 5 (20 g) wurden mit einem Fettalkoholethoxylat 10 EO (8 g) sowie Essigsäure (60 %; 2 g) in einem Becherglas gemischt und vollentsalztes Wasser (70 g) wurde in kleinen Portionen innerhalb von 10 min unter Rühren zugegeben bis eine klare Lösung entstand. 40 g dieser Lösung wurde mit 959 g Wasser verdünnt und 1 g Essigsäure (60%) zugegeben. Nach Aufrühren wurden diese Verdünnungen (Flotten) mittels Foulard-Verfahren (2 bar) auf ein Textilmuster (DIN A4, Frottee, Baumwolle, unbehandelt) ausgerüstet und für 2 min bei 140 °C getrocknet.

In Tabelle 4 sind die Ergebnisse der Tests zur Bewertung des Weichgriffs zusammengefasst.

**Tabelle 4: Weichgriffdaten von mit AB1-5 ausgerüsteten Textilien.**

| | **1.** | **2.** | **3.** | **AB 1** |
|---|---|---|---|---|
| **Proband 1** | 1 | 2 | 3 | 4 |
| **Proband 2** | 1 | 2 | 3 | 4 |
| **Proband 3** | 1 | 2 | 3 | 4 |
| **Proband 4** | 1 | 2 | 4 | 3 |
| **Proband 5** | 1 | 2 | 4 | 3 |
| **Proband 6** | 1 | 2 | 3 | 4 |
| **Proband 7** | 1 | 2 | 3 | 4 |
| **Proband 8** | 1 | 2 | 3 | 4 |
| **Durchschnitt** | 1 | 2 | 3,25 | 3,75 |

| | **1.** | **2.** | **3.** | **AB 2** |
|---|---|---|---|---|
| **Proband 1** | 1 | 2 | 3 | 4 |
| **Proband 2** | 2 | 1 | 3 | 4 |
| **Proband 3** | 1 | 2 | 3 | 4 |
| **Proband 4** | 1 | 2 | 3 | 4 |
| **Proband 5** | 1 | 2 | 3 | 4 |
| **Proband 6** | 1 | 2 | 3 | 4 |
| **Proband 7** | 1 | 2 | 3 | 4 |
| **Proband 8** | 1 | 2 | 4 | 3 |
| **Durchschnitt** | 1,125 | 1,875 | 3,125 | 3,875 |

| | **1.** | **2.** | **3.** | **AB 3** |
|---|---|---|---|---|
| **Proband 1** | 1 | 2 | 4 | 3 |
| **Proband 2** | 1 | 2 | 3 | 4 |
| **Proband 3** | 1 | 2 | 4 | 3 |
| **Proband 4** | 1 | 2 | 4 | 3 |
| **Proband 5** | 1 | 2 | 3 | 4 |
| **Proband 6** | 1 | 2 | 4 | 3 |
| **Proband 7** | 1 | 2 | 4 | 3 |
| **Proband 8** | 1 | 2 | 3 | 4 |
| **Durchschnitt** | 1 | 2 | 3,625 | 3,375 |

| | **1.** | **2.** | **3.** | **AB 4** |
|---|---|---|---|---|
| **Proband 1** | 1 | 2 | 3 | 4 |
| **Proband 2** | 1 | 2 | 4 | 3 |
| **Proband 3** | 1 | 2 | 3 | 4 |
| **Proband 4** | 1 | 2 | 4 | 3 |
| **Proband 5** | 1 | 2 | 3 | 4 |
| **Proband 6** | 1 | 2 | 4 | 3 |
| **Proband 7** | 1 | 2 | 3 | 4 |
| **Proband 8** | 1 | 2 | 4 | 3 |
| **Durchschnitt** | 1 | 2 | 3,5 | 3,5 |

| | **1.** | **2.** | **3.** | **AB** 5 |
|---|---|---|---|---|
| **Proband 1** | 1 | 2 | 3 | 4 |
| **Proband 2** | 1 | 2 | 3 | 4 |
| **Proband 3** | 1 | 2 | 3 | 4 |
| **Proband 4** | 1 | 2 | 3 | 4 |
| **Proband 5** | 1 | 2 | 4 | 3 |
| **Proband 6** | 1 | 2 | 4 | 3 |
| **Proband 7** | 1 | 2 | 3 | 4 |
| **Proband 8** | 1 | 2 | 4 | 3 |
| **Durchschnitt** | 1 | 2 | 3,375 | 3,625 |

Mit der Zusammensetzung nach Vergleichsbeispiel 1 ausgerüstete Textilien ergaben im obigen Test einen Weichgriff von 4.

### Diskussion:

In Tabelle 2 sind die Ergebnisse der Messung der antibakteriellen Aktivität, der Messung der Dielektrizitätskonstante, der Saugfähigkeit (als Einsinkzeit definiert), sowie des Weichgriffes zusammengefasst.

Für alle Textilien, die mit den Ausführungsbeispielen 1 - 5 ausgerüstet wurden, konnten bei den Griffexperimenten durchschnittliche Werte von 3,1 bis 3,9 erzielt werden. Diese Textilien weisen somit eine deutliche Verbesserung des Weichgriffs im Vergleich zum unbehandelten Textil auf. Durch die Messung der antibakteriellen Aktivität gemäß ISO 20743 konnte gezeigt werden, dass die Organopolysiloxane (Komponente (II)) der Ausführungsbeispiele 1 bis 5 mit einer gemessenen Dielektrizitätskonstante von 3,05 bis 5,73 und einer Saugfähigkeit von ≤3 sec sehr gute antibakterielle Aktivitäten gegen Staphylococcus aureus zeigen und diese nach 5 Wäschen nicht signifikant abfallen oder sogar zunehmen.

Überraschenderweise wurde festgestellt, dass die antibakterielle Aktivität des Organopolysiloxans von Vergleichsbeispiel 1 mit einer Dielektrizitätskonstante von 2,86 und einer Einsinkzeit >300 sec einen signifikanten Verlust von 3,86 auf 0,71 nach 5 Wäschen aufweist.

Die folgenden Punkte sind Gegenstand der vorliegenden Erfindung:
1. Zusammensetzung, umfassend
   (I) mindestens ein quaternäres Ammoniumsilan, dargestellt durch die folgende Formel (1)

      X₄₋ₙSi(-R-NR¹R²R³)ₙ⁺ Y⁻ Formel (1)

      wobei
      X unabhängig ein Alkoxyrest mit 1 bis 6 Kohlenstoffatomen, ein Alkoxyalkoxyrest mit 2 bis 8 Kohlenstoffatomen oder ein Alkylrest mit 1 bis 6 Kohlenstoffatomen ist,
      Y⁻ ein Säureanion ist,
      n eine ganze Zahl ausgewählt aus 1, 2 oder 3 ist,
      R ein zweiwertiger Kohlenwasserstoffrest mit 1 bis 6 Kohlenstoffatomen ist,
      R¹ ein gesättigter oder ungesättigter, linearer oder verzweigter Kohlenwasserstoffrest mit 8 bis 22 Kohlenstoffatomen ist,
      R² ein gesättigter oder ungesättigter, linearer oder verzweigter Kohlenwasserstoffrest mit 1 bis 22 Kohlenstoffatomen ist,
      R³ ein gesättigter oder ungesättigter, linearer oder verzweigter Kohlenwasserstoffrest mit 1 bis 22 Kohlenstoffatomen ist;
   (II) eine Organopolysiloxan-Verbindung mit mindestens einer funktionellen Gruppe ausgewählt aus einer quaternären Ammoniumgruppe, einer Aminogruppe, einer Amidogruppe und einer Polyalkylenoxidgruppe, wobei die Dielektrizitätskonstante der Komponente (II) 2,90-10,0 beträgt, gemessen bei 25°C und 10 kHz;
   (III) ggf. einen Emulgator;
   (IV) Wasser; und
   (V) ggf. ein organisches Lösungsmittel.
2. Zusammensetzung nach Punkt 1, wobei X ein Alkoxyrest mit 1 bis 6 Kohlenstoffatomen ist, bevorzugt ausgewählt aus Methoxy, Ethoxy, insbesondere Methoxy.
3. Zusammensetzung nach einem der vorhergehenden Punkte, wobei n eine ganze Zahl ausgewählt aus 1 oder 2 ist, bevorzugt 1.
4. Zusammensetzung nach einem der vorhergehenden Punkte, wobei R eine zweiwertige Alkylgruppe mit 1 bis 6 Kohlenstoffatomen ist, bevorzugt ausgewählt aus Ethyl oder Propyl, besonders bevorzugt Propyl.
5. Zusammensetzung nach einem der vorhergehenden Punkte, wobei R¹ ein Alkylrest mit 8 bis 22 Kohlenstoffatomen ist, bevorzugt ausgewählt aus Dodecyl,Tetradecyl, Hexadecyl oder Octadecyl, besonders bevorzugt Tetradecyl, Hexadecyl oder Octadecyl.
6. Zusammensetzung nach einem der vorhergehenden Punkte, wobei R² ein Alkylrest mit 1 bis 22 Kohlenstoffatomen, insbesondere 1-10 Kohlenstoffatomen, ist, bevorzugt Methyl oder Ethyl, besonders bevorzugt Methyl.
7. Zusammensetzung nach einem der vorhergehenden Punkte, wobei R³ ein Alkylrest mit 1 bis 22 Kohlenstoffatomen, insbesondere 1-10 Kohlenstoffatomen, ist, bevorzugt Methyl oder Ethyl, besonders bevorzugt Methyl.
8. Zusammensetzung nach einem der vorhergehenden Punkte, wobei Y⁻ ausgewählt ist aus Chlorid, Bromid, lodid, Methosulfat oder Tosylat.
9. Zusammensetzung nach einem der vorhergehenden Punkte, wobei der Gehalt an Komponente (I) 1-25 Gew.%, bevorzugt 1-15 Gew.%, besonders bevorzugt 1-10 Gew.% bezogen auf das Gesamtgewicht der Zusammensetzung beträgt.
10. Zusammensetzung nach einem der vorhergehenden Punkte, wobei Komponente (I) antimikrobielle und/oder antiviral wirkt.
11. Zusammensetzung nach einem der vorhergehenden Punkte, wobei der Gehalt an Komponente (II) 1-50 Gew.%, bevorzugt 5-30 Gew.%,besonders bevorzugt 10-20 Gew.% bezogen auf das Gesamtgewicht der Zusammensetzung beträgt.
12. Zusammensetzung nach einem der vorhergehenden Punkte, wobei die Komponente (II) ein Polydimethylsiloxan mit mindestens einer funktionellen Gruppe ausgewählt aus einer quaternären Ammoniumgruppe, einer Aminogruppe, einer Amidogruppe und einer Polyalkylenoxidgruppe ist.
13. Zusammensetzung nach einem der vorhergehenden Punkte, wobei der Gehalt an der Polyalkylenoxidgruppen in Komponente (II) 0 - 60 Gew.%, bevorzugt 0 - 40 Gew.%, besonders bevorzugt 0- 20 Gew.% bezogen auf das Gesamtgewicht von Komponente (II) beträgt.
14. Zusammensetzung nach einem der vorhergehenden Punkte, wobei die Dielektrizitätskonstante der Komponente (II) 2,90-6,50, stärker bevorzugt 2,90-5,00, insbesondere 3,00-5,80 beträgt, gemessen bei 25°C und 10 kHz.
15. Zusammensetzung nach einem der vorhergehenden Punkte, wobei die Komponente (II) ein Molekulargewicht von 500 - 50000 g/mol, bevorzugt 1000 - 20000, besonders bevorzugt von 1500 - 10000 g/mol aufweist.
16. Zusammensetzung nach einem der vorhergehenden Punkte, wobei die Komponente (II) im Saugfähigkeitstest gemäß AATCC 79 eine Einsinkzeit auf Baumwolle von 0,1 - 30 sec, bevorzugt 0,1 -10 sec besonders bevorzugt 0,1 - 3 sec bewirkt.
17. Zusammensetzung nach einem der vorhergehenden Punkte, wobei die Komponente (II) mindestens eine quaternäre Ammoniumgruppe und/oder mindestens eine Aminogruppe, wie mindestens eine primäre, sekundäre oder tertiäre Aminogruppe, aufweist.
18. Zusammensetzung nach einem der vorhergehenden Punkte, wobei die Komponente (II) mindestens eine quaternäre Ammoniumgruppe, mindestens eine quaternäre Ammonium- und Polyalkylenoxidgruppe, mindestens eine Amino- und Polyalkylenoxidgruppe, mindestens eine quaternäre Ammonium-, Amino- und Polyalkylenoxidgruppe, mindestens eine Amino- und Amidogruppe, mindestens eine Amino-, Amido-, und Polyalkylenoxidgruppe oder mindestens eine quaternäre Ammonium-, Amino-, Amido- und Polyalkylenoxidgruppe aufweist.
19. Zusammensetzung nach einem der vorhergehenden Punkte, wobei die Komponente (II) einen Stickstoffgehalt von 0,05-2 Gew.%, bevorzugt 0,10- 1,5 Gew.%, besonders bevorzugt 0,10 - 1,0 Gew.% unter der Berücksichtigung der ggf. vorhandenen Amino-, Amido und Ammoniumgruppen aufweist.
20. Zusammensetzung nach einem der vorhergehenden Punkte, wobei Komponente (II) ein Weichgriffmittel ist.
21. Zusammensetzung nach einem der vorhergehenden Punkte, wobei ein Gewichtsverhältnis der Komponente (I) zur Komponente (II) in der Zusammensetzung 1 : 50 bis 25 : 1, bevorzugt 1 : 30 bis 3 : 1, stärker bevorzugt 1 : 20 bis 1 : 1 beträgt.
22. Zusammensetzung nach einem der vorhergehenden Punkte, wobei die Komponente (III) einen kationischen, amphoteren oder nichtionischen Emulgator umfasst.
23. Zusammensetzung nach einem der vorhergehenden Punkte, wobei die Komponente (III) ein quaternäres Ammoniumsalz, bevorzugt Di-(C₁₀-C₂₄)-Alkyldimethylammoniumchlorid, (C₁₀-C₂₄)-Alkyldimethylethylammoniumchlorid oderbromid, (C₁₀-C₂₄)-Alkyltrimethylammoniumchlorid oder -bromid, (C₁₀-C₂₄)-Alkyldimethylbenzylammoniumchlorid, N-(C₁₀-C₁₈)-Alkylpyridiniumchlorid oder -bromid, N-(C₁₂-C₁₈)-isochinoliniumchlorid, -bromid oder -monoalkylsulfat, N-(C₁₂-C₁₈)-Alkyl-N-methyl-ammounium-morpholinium-chlorid, -bromid oder -monoalkylsulfat, N-(C₁₂-C₁₈)-Alkyl-N-ethyl-ammounium-morpholinium-chlorid, -bromid oder -monoalkylsulfat, N-(C₁₂-C₁₈)-Alkylmethylpolyoxyethylenammoniumchlorid,-bromid oder -monoalkylsulfat, ein Salz eines primären, sekundären oder tertiären Fettamins, das 8 bis 24 Kohlenstoffatomen aufweist, mit einer organischen Säure, wie Essigsäure, Milchsäure, Glycolsäure oder Zitronensäure, oder einer anorganischen Säure, wie Salzsäure, Schwefelsäure und Phosphorsäure, oder eine Mischung davon umfasst.
24. Zusammensetzung nach einem der vorhergehenden Punkte, wobei die Komponente (III) ein Alkoxylierungsprodukt, insbesondere ein Ethoxylat oder Propoxylat, eines aliphatischen Alkohols mit 6 bis 22 Kohlenstoffatomen, insbesondere eines verzweigten aliphatischen Alkohols, umfasst, bevorzugt ein Ethoxylat von 2,6,8-Trimethyl-4-nonanol, Isodecylalkohol oder Isotridecylalkohol mit einem Ethylenoxidgehalt von 2 bis 50 Mol, insbesondere 3 bis 15 Mol.
25. Zusammensetzung nach einem der vorhergehenden Punkte, wobei der Gehalt an Komponente (III) 0-20 Gew.%, bevorzugt 1-15 Gew.%, besonders bevorzugt 2-10 Gew.%, bezogen auf das Gesamtgewicht der Zusammensetzung beträgt.
26. Zusammensetzung nach einem der vorhergehenden Punkte, wobei der Gehalt an Komponente (V) 0-20 Gew.%, bevorzugt 1-10 Gew.%, besonders bevorzugt 2-6 Gew.% bezogen auf das Gesamtgewicht der Zusammensetzung beträgt.
27. Zusammensetzung nach einem der vorhergehenden Punkte, wobei die Komponente (V) einen monofunktionellen oder polyfunktionellen Alkohol mit 2-10 Kohlenstoffatomen, insbesondere Methanol, Ethanol, Isopropanol und/oder einen Dialkohol, einen Alkylether, insbesondere einen Mono- oder Dialkylether, oder Alkylester, insbesondere einen Mono- oder Diester, davon oder eine Mischung davon umfasst.
28. Zusammensetzung nach einem der vorhergehenden Punkte, wobei Komponente (V) Butyldiglykol, 1,2-Propylenglykol, Dipropylenglykol, Dipropylenglykolmonomethylether, Dipropylenglykolmonobutylether, Tripropylenglykolmonobutylether oder eine Mischung davon umfasst.
29. Zusammensetzung nach einem der vorhergehenden Punkte, wobei die Zusammensetzung ferner umfasst:
   (VI) eine mono- oder polyfunktionelle Carbonsäure mit 1-5 Kohlenstoffatomen.
30. Zusammensetzung nach Punkt 29, wobei die Komponente (VI) ausgewählt ist aus Ameisensäure, Essigsäure, Propansäure, Butansäure, Pentansäure, Milchsäure, Zitronensäure, Maleinsäure, Fumarsäure, Bernsteinsäure, Brenztraubensäure, Polyhydroxycarbonsäuren und Mischungen davon.
31. Zusammensetzung nach einem der Punkte 29-30, wobei der Gehalt an Komponente (VI) 0-10 Gew.%, bevorzugt 0,5-5 Gew.%, besonders bevorzugt 1-5 Gew.% bezogen auf das Gesamtgewicht der Zusammensetzung beträgt.
32. Zusammensetzung nach einem der vorhergehenden Punkte, wobei der Gehalt an Wasser 0-98 Gew.%, bevorzugt 25-92,5 Gew.%, besonders bevorzugt 49-84 Gew.% bezogen auf das Gesamtgewicht der Zusammensetzung beträgt.
33. Verwendung der Zusammensetzung nach einem der Punkte 1-32 zur Ausrüstung eines Textils.
34. Verwendung nach Anspruch 33 zur antimikrobiellen Ausrüstung des Textils.
35. Verfahren zur Ausrüstung eines Textils, umfassend
   Applizieren der Zusammensetzung nach einem der Ansprüche 1-32 auf ein Textil und
   ggf. Trocknen des so behandelten Textils.
36. Verfahren nach Punkt 35, wobei die Zusammensetzung in einer Menge von 0,2-5 Trockengew.% der Komponenten (I), (II) und ggf. (III) bezogen auf das Gewicht des Textils appliziert wird.
37. Verfahren nach einem der Punkte 35-36, wobei das Trocknen bei einer Temperatur von 80-150°C erfolgt.
38. Produkt, erhältlich durch ein Verfahren nach einem der Punkte 35-37.
39. Verfahren zur Herstellung einer Zusammensetzung nach einem der Punkte 1-32, umfassend
   a) Mischen der Komponenten (I), (II), ggf. (III), ggf. (V) und ggf. (VI) und
   b) ggf. Zugeben von (IV) Wasser zu der in Schritt a) erhaltenen Mischung.

## Patentansprüche

1. Zusammensetzung, umfassend
(I) mindestens ein quaternäres Ammoniumsilan, dargestellt durch die folgende Formel (1)
X₄₋ₙSi(-R-NR¹R²R³)ₙ⁺ Y⁻ Formel (1)
wobei
X unabhängig ein Alkoxyrest mit 1 bis 6 Kohlenstoffatomen, ein Alkoxyalkoxyrest mit 2 bis 8 Kohlenstoffatomen oder ein Alkylrest mit 1 bis 6 Kohlenstoffatomen ist,
Y⁻ ein Säureanion ist,
n eine ganze Zahl ausgewählt aus 1, 2 oder 3 ist,
R ein zweiwertiger Kohlenwasserstoffrest mit 1 bis 6 Kohlenstoffatomen ist,
R¹ ein gesättigter oder ungesättigter, linearer oder verzweigter Kohlenwasserstoffrest mit 8 bis 22 Kohlenstoffatomen ist,
R² ein gesättigter oder ungesättigter, linearer oder verzweigter Kohlenwasserstoffrest mit 1 bis 22 Kohlenstoffatomen ist,
R³ ein gesättigter oder ungesättigter, linearer oder verzweigter Kohlenwasserstoffrest mit 1 bis 22 Kohlenstoffatomen ist;
(II) eine Organopolysiloxan-Verbindung mit mindestens einer funktionellen Gruppe ausgewählt aus einer quaternären Ammoniumgruppe, einer Aminogruppe, einer Amidogruppe und einer Polyalkylenoxidgruppe,
wobei die Dielektrizitätskonstante der Komponente (II) 2,90-10,0 beträgt, gemessen bei 25°C und 10 kHz;
(III) ggf. einen Emulgator;
(IV) Wasser; und
(V) ggf. ein organisches Lösungsmittel.

2. Zusammensetzung nach Anspruch 1, wobei X ein Alkoxyrest mit 1 bis 6 Kohlenstoffatomen ist, bevorzugt ausgewählt aus Methoxy oder Ethoxy, und/oder
wobei R eine zweiwertige Alkylgruppe mit 1 bis 6 Kohlenstoffatomen ist, bevorzugt ausgewählt aus Ethyl oder Propyl, und/oder
wobei R¹ ein Alkylrest mit 8 bis 22 Kohlenstoffatomen ist, bevorzugt ausgewählt aus Dodecyl,Tetradecyl, Hexadecyl oder Octadecyl, und/oder
wobei R² ein Alkylrest mit 1 bis 22 Kohlenstoffatomen ist, bevorzugt Methyl oder Ethyl, und/oder
wobei R³ ein Alkylrest mit 1 bis 22 Kohlenstoffatomen ist, bevorzugt Methyl oder Ethyl, und/oder
wobei Y⁻ ausgewählt ist aus Chlorid, Bromid, lodid, Methosulfat oder Tosylat.

3. Zusammensetzung nach einem der vorhergehenden Ansprüche, wobei der Gehalt an Komponente (I) 1-25 Gew.%, bevorzugt 1-15 Gew.%, besonders bevorzugt 1-10 Gew.% bezogen auf das Gesamtgewicht der Zusammensetzung beträgt, und/oder
wobei der Gehalt an Komponente (II) 1-50 Gew.%, bevorzugt 5-30 Gew.%,besonders bevorzugt 10-20 Gew.% bezogen auf das Gesamtgewicht der Zusammensetzung beträgt, und/oder
wobei der Gehalt an Wasser bis zu 98 Gew.%, bevorzugt 25-92,5 Gew.%, besonders bevorzugt 49-84 Gew.% bezogen auf das Gesamtgewicht der Zusammensetzung beträgt.

4. Zusammensetzung nach einem der vorhergehenden Ansprüche, wobei die Komponente (II) ein Polydimethylsiloxan mit mindestens einer funktionellen Gruppe ausgewählt aus einer quaternären Ammoniumgruppe, einer Aminogruppe, einer Amidogruppe und einer Polyalkylenoxidgruppe ist.

5. Zusammensetzung nach einem der vorhergehenden Ansprüche, wobei die Dielektrizitätskonstante der Komponente (II) 2,90-6,50, stärker bevorzugt 2,90-5,00, insbesondere 3,00-5,80 beträgt, gemessen bei 25°C und 10 kHz.

6. Zusammensetzung nach einem der vorhergehenden Ansprüche, wobei die Komponente (II) ein Molekulargewicht von 500 - 50000 g/mol, bevorzugt 1000 - 20000, besonders bevorzugt von 1500 - 10000 g/mol aufweist.

7. Zusammensetzung nach einem der vorhergehenden Ansprüche, wobei die Komponente (II) mindestens eine quaternäre Ammoniumgruppe, mindestens eine quaternäre Ammonium- und Polyalkylenoxidgruppe, mindestens eine Amino- und Polyalkylenoxidgruppe, mindestens eine quaternäre Ammonium-, Amino- und Polyalkylenoxidgruppe, mindestens eine Amino- und Amidogruppe, mindestens eine Amino-, Amido-, und Polyalkylenoxidgruppe oder mindestens eine quaternäre Ammonium-, Amino-, Amido- und Polyalkylenoxidgruppe aufweist.

8. Zusammensetzung nach einem der vorhergehenden Ansprüche, wobei die Komponente (III) ein quaternäres Ammoniumsalz, bevorzugt Di-(C₁₀-C₂₄)-Alkyldimethylammoniumchlorid, (C₁₀-C₂₄)-Alkyldimethylethylammoniumchlorid oderbromid, (C₁₀-C₂₄)-Alkyltrimethylammoniumchlorid oder -bromid, (C₁₀-C₂₄)-Alkyldimethylbenzylammoniumchlorid, N-(C₁₀-C₁₈)-Alkylpyridiniumchlorid oder -bromid, N-(C₁₂-C₁₈)-isochinoliniumchlorid, -bromid oder -monoalkylsulfat, N-(C₁₂-C₁₈)-Alkyl-N-methyl-ammounium-morpholinium-chlorid, -bromid oder -monoalkylsulfat, N-(C₁₂-C₁₈)-Alkyl-N-ethyl-ammounium-morpholinium-chlorid, -bromid oder -monoalkylsulfat, N-(C₁₂-C₁₈)-Alkylmethylpolyoxyethylenammoniumchlorid,-bromid oder -monoalkylsulfat, ein Salz eines primären, sekundären oder tertiären Fettamins, das 8 bis 24 Kohlenstoffatomen aufweist, mit einer organischen Säure, wie Essigsäure, Milchsäure, Glycolsäure oder Zitronensäure, oder einer anorganischen Säure, wie Salzsäure, Schwefelsäure und Phosphorsäure, oder eine Mischung davon umfasst.

9. Zusammensetzung nach einem der vorhergehenden Ansprüche, wobei die Komponente (III) ein Alkoxylierungsprodukt, insbesondere ein Ethoxylat oder Propoxylat, eines aliphatischen Alkohols mit 6 bis 22 Kohlenstoffatomen, insbesondere eines verzweigten aliphatischen Alkohols, umfasst, bevorzugt ein Ethoxylat von 2,6,8-Trimethyl-4-nonanol, Isodecylalkohol oder Isotridecylalkohol mit einem Ethylenoxidgehalt von 2 bis 50 Mol, insbesondere 3 bis 15 Mol.

10. Zusammensetzung nach einem der vorhergehenden Ansprüche, wobei Komponente (V) Butyldiglykol, 1,2-Propylenglykol, Dipropylenglykol, Dipropylenglykolmonomethylether, Dipropylenglykolmonobutylether, Tripropylenglykolmonobutylether oder eine Mischung davon umfasst.

11. Zusammensetzung nach einem der vorhergehenden Ansprüche, wobei die Zusammensetzung ferner umfasst:
(VI) eine mono- oder polyfunktionelle Carbonsäure mit 1-5 Kohlenstoffatomen, wobei die Komponente (VI) bevorzugt ausgewählt ist aus Ameisensäure, Essigsäure, Propansäure, Butansäure, Pentansäure, Milchsäure, Zitronensäure, Maleinsäure, Fumarsäure, Bernsteinsäure, Brenztraubensäure, Polyhydroxycarbonsäuren und Mischungen davon.

12. Verwendung der Zusammensetzung nach einem der Ansprüche 1-11 zur Ausrüstung eines Textils.

13. Verfahren zur Ausrüstung eines Textils, umfassend
Applizieren der Zusammensetzung nach einem der Ansprüche 1-11 auf ein Textil und
ggf. Trocknen des so behandelten Textils,
wobei die Zusammensetzung bevorzugt in einer Menge von 0,2-5 Trockengew.% der Komponenten (I), (II) und ggf. (III) bezogen auf das Gewicht des Textils appliziert wird.

14. Produkt, erhältlich durch ein Verfahren nach Anspruch 13.

15. Verfahren zur Herstellung einer Zusammensetzung nach einem der Ansprüche 1-11, umfassend
a) Mischen der Komponenten (I), (II), ggf. (III), ggf. (V) und ggf. (VI) und
b) ggf. Zugeben von (IV) Wasser zu der in Schritt a) erhaltenen Mischung.
